# EUROPÄISCHE PATENTSCHRIFT

(11) **EP 1 321 220 B1**
(45) Veröffentlichungstag und Bekanntmachung des Hinweises auf die Patenterteilung: **14.07.2004**
(21) Anmeldenummer: 02025165.8
(22) Anmeldetag: 11.11.2002
(51) Int. Cl.: B23P 19/06

(54) **Schrauberanordnung**
Screwing device
Dispositif de vissage

(30) Priorität: 13.12.2001 DE 10161169
(43) Veröffentlichungstag der Anmeldung: 25.06.2003
(73) Patentinhaber: Nothelfer GmbH, D-88212 Ravensburg (DE)
(72) Erfinder: Rauland, Theo, 54317 Osburg (DE); Sondag, Peter, 66706 Perl-Borg (DE)
(74) Vertreter: Dahlkamp, Heinrich-Leo, Dipl.-Ing.

(56) Entgegenhaltungen:
- EP-A- 0 593 338
- DE-A- 3 645 027
- DE-A- 3 713 008
- PATENT ABSTRACTS OF JAPAN vol. 1999, no. 12, 29. Oktober 1999 (1999-10-29) -& JP 11 188538 A (NITTO SEIKO CO LTD), 13. Juli 1999 (1999-07-13)
- "USE OF FORCE FEEDBACK IN AN AUTOMATED SCREW-DRIVING MACHINE" IBM TECHNICAL DISCLOSURE BULLETIN, IBM CORP. NEW YORK, US, Bd. 33, Nr. 10B, 1. März 1991 (1991-03-01), Seiten 184-185, XP000110186 ISSN: 0018-8689

## Beschreibung

Die Erfindung betrifft eine Schrauberanordnung, insbesondere für Montagelinien zur Fahrzeugmontage von Kraftfahrzeugen, mit einem Geradschrauber, der an einer Konsole mittels eines Hubzylinders in Achsrichtung und quer dazu in einer Schwimmeinheit verschiebbar gelagert ist sowie in ausgefahrenem Zustand mit einer Zwischenspindel oder dergleichen kuppelbar ist.

Eine solche Schrauberanordung ist in der EP-A-0 593 338 offenbart.

Bei der Fahrzeugmontage müssen eine Vielzahl von Verschraubungen vollautomatisch durchgeführt werden. Die dazu erforderlichen Schrauber bzw. Schrauberanordnungen sind auf Konsolen angeordnet, die sich neben der Montagelinie befinden und bei Bedarf in die gewünschte Position gebracht werden. Beispielsweise werden zum Verschrauben eines Tanks mit einer Karosserie der Tank auf einen Werkstückträger und die Karosserie an einer Hängebahn zusammengeführt. Nachdem der Tank und die Karosserie in ihrer Sollposition sind, wird die Konsole mit der Schrauberanordnung unter den Werkstückträger gebracht. Die Schrauber der Schrauberanordnung besitzen Steckschlüsseleinsätze. Die Schrauber werden mit Hilfe der Hubzylinder hochgefahren, bis die Steckschlüsseleinsätze mit der Zwischenspindel kuppeln. Das Ankuppeln wird durch die Schwimmeinheit unterstützt. Beim weiteren Hochfahren wird die Zwischenspindel mitgenommen, die an ihrem freien Ende eine Schraubernuß mit einer darin vorher eingelegten Schraubenmutter trägt. Der Schraubprozeß wird durch Betätigen des Antriebs des oder der Schrauber gestartet. Während des Schraubens werden über Meßwertgeber im Schrauber Drehmoment, Drehwinkel und Drehzahl überwacht, um festzustellen, ob die Verschraubung ordnungsgemäß durchgeführt worden ist. Anschließend wird die Konsole mit der Schrauberanordnung wieder abgesenkt.

Geradschrauber gibt es in unterschiedlichen Ausführungen. Als Geradschrauber werden Schrauber verstanden, deren Abtriebsachse coliniear zum Antrieb verläuft. Derartige Schrauber mit geraden Schraubspindeln gibt es von verschiedenen Herstellern (z. B. Bosch Schraubsystem 300, Georges Renault Schraubspindel EM und Atlas Copco Schraubspindeln QMR). Bisher ist es erforderlich für jeden Geradschrauber und auch für jeden Bedarfsfall die Anbindung des Geradschraubers an die Konsole und an den Hubzylinder neu zu konstruieren. Das bedeutet einen erheblichen Aufwand bei einer Schraubpunktveränderung.

Aufgabe der Erfindung ist es, die Schrauberanordnung der eingangs beschriebenen Gattung so zu gestalten, daß bei kompakter Bauform auf einfache Weise alle gängigen Geradschrauber aufgenommen werden können.

Diese Aufgabe wird mit einer Schrauberanordnung der eingangs beschriebenen Gattung gelöst, die gekennzeichnet ist durch ein Gehäuse, in dem der Hubzylinder und ein damit antreibbarer Schlitten angeordnet sind, wobei der Schlitten im Gehäuse geführt ist und die Schwimmeinheit für den daran mittels einer Adapterplatte befestigen Geradschrauber trägt. - Dementsprechend können alle funktionswesentlichen Bauteile im Gehäuse angeordnet werden, das je nach Bedarf an beliebigen Stellen der Konsole angebracht werden kann. Auf dem Schlitten können Geradschrauber unterschiedlicher Bauart angeordnet werden, wobei es lediglich erforderlich ist, geeignete Adapterplatten vorzusehen die so konstruiert sind, daß die Steckschlüsseleinsätze der jeweiligen Geradschrauber im Ruhezustand jeweils die gleiche Position einnehmen.

Das Gehäuse ist vorzugsweise ein an einer Längsseite und einer Stirnseite offener Kasten. Der Kasten kann auch Meßfühler zum Erfassen der Schlittenposition aufweisen.

Bei einer bevorzugten Ausführung ist der Hubzylinder ein Flachzylinder, das ist ein Hubzylinder, dessen Zylinderraum und Kolben beispielsweise ovale Querschnitte aufweisen. Zweckmäßig wird der Hubzylinder über dem im Gehäuse geführten Schlitten angeordnet.

Eine raumsparende Schwimmeinheit ist dadurch gekennzeichnet, daß sie einen zum Schlitten gehörenden Steg und eine den Steg überfassende U-förmige Schwimmglocke sowie eine Drehmomentabstützung zwischen Steg und Schwimmglocke aufweist, wobei der Steg und die U-Schenkel der Schwimmglocke Durchgangsöffnunaen für das sich dadurch mit radialem Spiel erstreckende Spindelende des Geradschraubers aufweisen. Zwischen dem Steg und den U-Schenkeln der Schwimmglocke können Axiallager angeordnet sein, die eine radiale Verschiebung dieser Bauteile zueinander zulassen. Die Adapterplatte wird zweckmäßig am kantenseitigen U-Schwenkel der Schwimmglocke befestigt.

Die Drehmomentabstützung stellt sicher, daß das Drehmoment des Geradschraubers auf kurzem Wege über den Schlitten in das Gehäuse bzw. den Kasten abgeleitet wird. Dazu kann die Drehmomentabstützung einen Bolzen aufweisen, der mit einem Gewindeabschnitt in eine Gewindebohrung eines U-Schenkels der Schwimmglocke eindrehbar ist und der sich mit Spiel durch eine Bohrung des Stegs erstreckt.

Im Folgenden wird ein in der Zeichnung dargestelltes Ausführungsbeispiel der Erfindung erläutert; es zeigen:

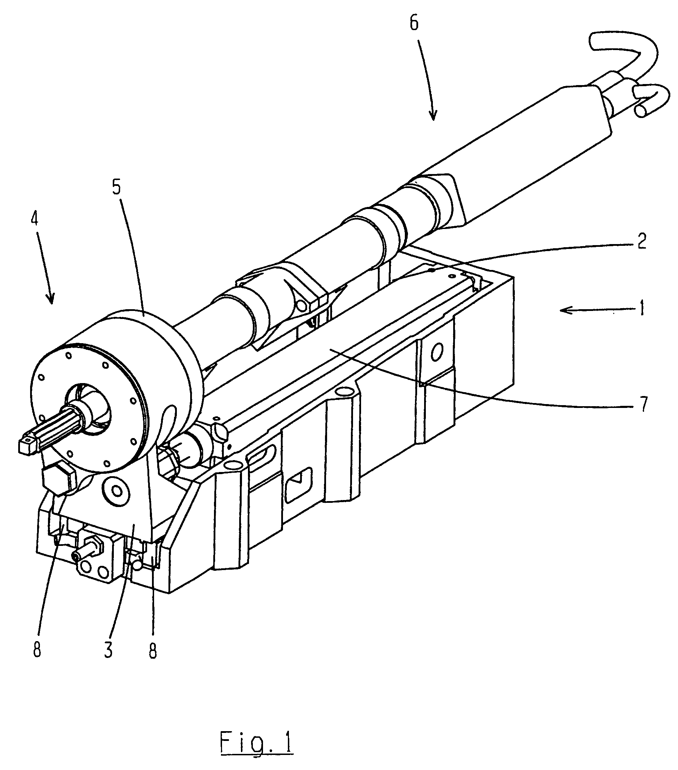

- Fig. 1: in perspektivischer Darstellung die Ansicht einer Schrauberanordnung,

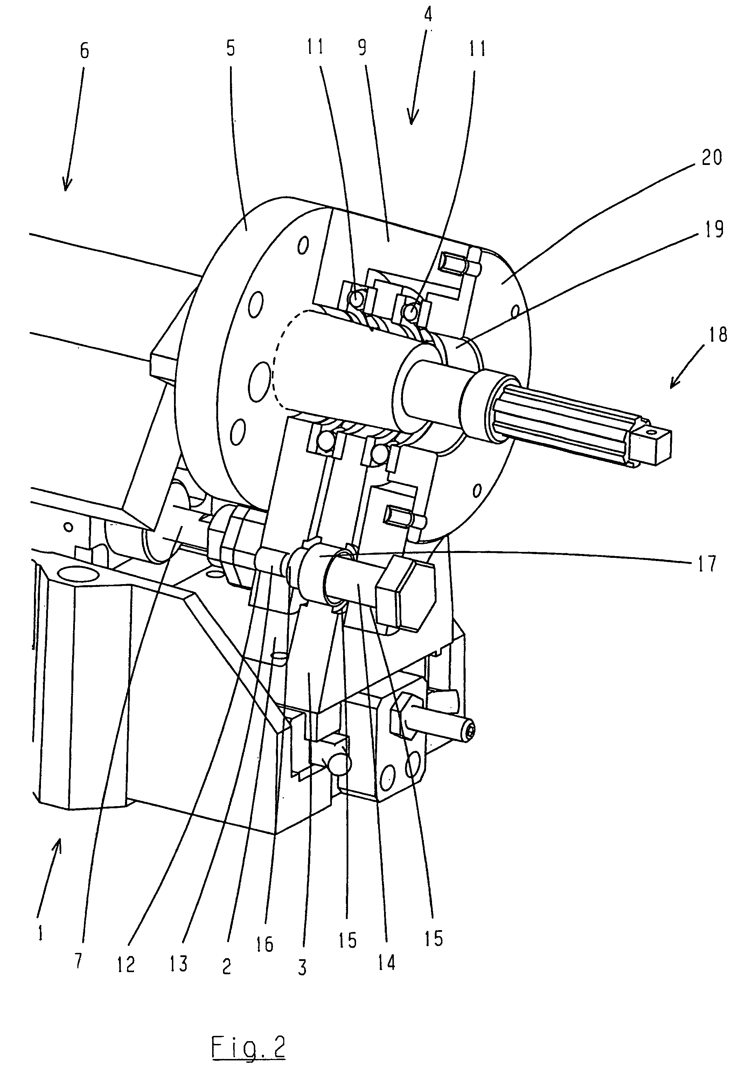

- Fig. 2: ein Detail des Gegenstandes nach Fig. 1, teilweise aufgeschnitten,

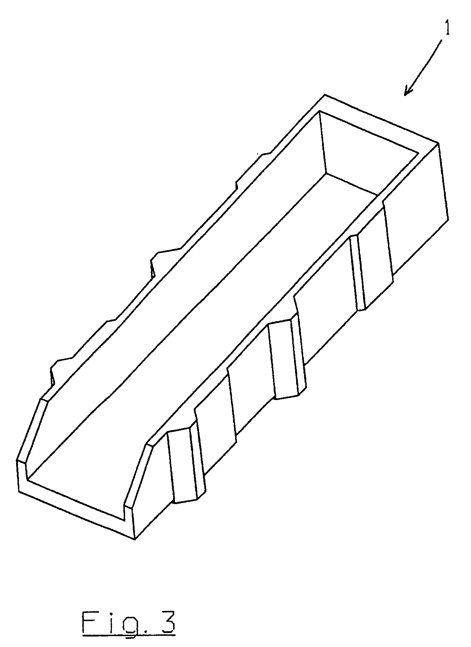

- Fig. 3: in perspektivischer Darstellung die Ansicht eines Gehäuses,

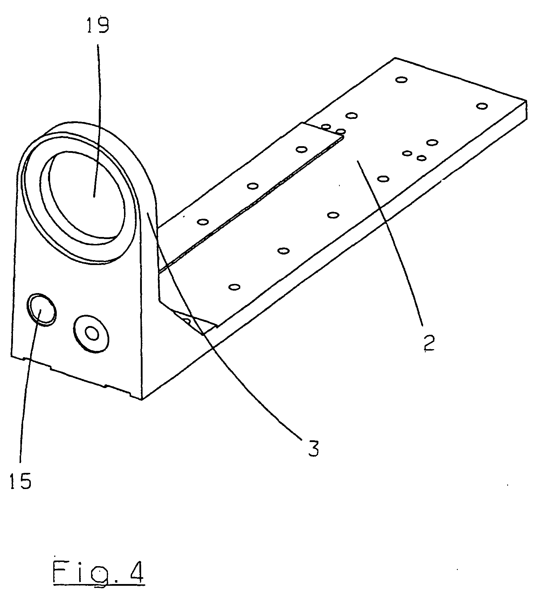

- Fig. 4: in perspektivischer Darstellung die Ansicht eines Schlittens,

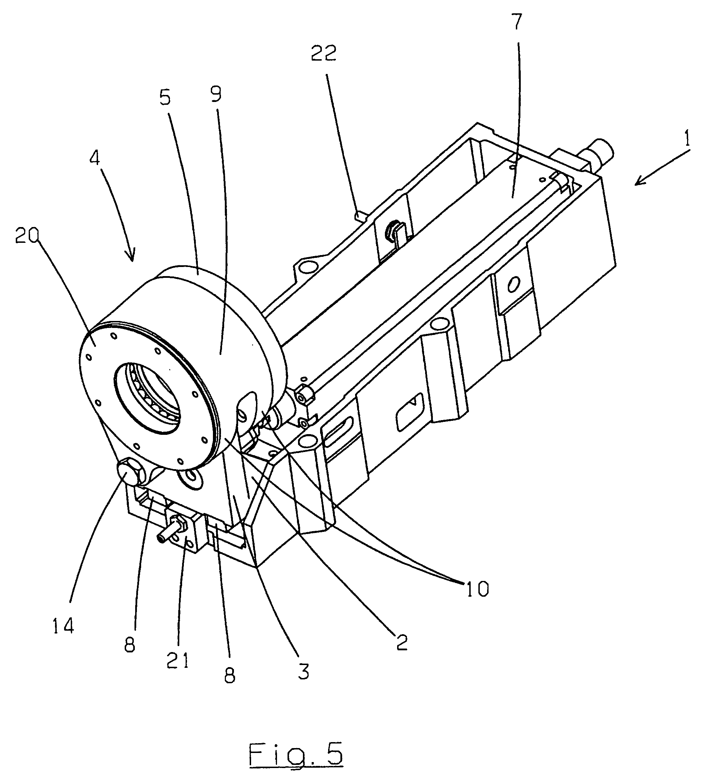

- Fig. 5: in perspektivischer Darstellung die Ansicht des Gegenstandes nach Fig. 1 jedoch ohne Schrauber,

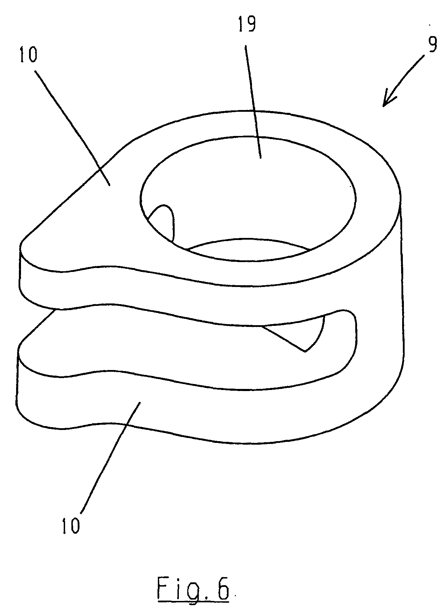

- Fig. 6: in perspektivischer Darstellung die Ansicht einer Schwimmglocke.

Zu der in der Zeichnung dargestellten Schrauberanordnung gehören ein kastenartiges Gehäuse 1, das an der Oberseite und an einer Stirnseite offen ist, sowie ein im Gehäuse 1 verschiebbar angeordneter Schlitten 2, der an einem senkrecht davon ausgehenden Steg 3 eine Schwimmeinheit 4 für einen daran mittels einer Adapterplatte 5 zu befestigenden Geradschrauber 6 trägt, und ein Hubzylinder 7, dessen eines Ende an der verbliebenen Stirnseite des Gehäuses 1 und dessen anderes Ende an dem Steg 3 abgestützt ist.

Der Schlitten 2 ist an Führungsschienen 8 geführt, die am Boden des Gehäuses 1 angeordnet sind. Der Hubzylinder 7 ist über dem Schlitten 2 angeordnet. Das Gehäuse 1 weist Anschläge 21 zur Begrenzung des Schlittenweges sowie Meßfühler 22 zum Erfassen der Schlittenposition auf.

Zur Schwimmeinheit 4 gehört eine U-förmige Schwimmglocke 9 mit zwei U-Schenkeln 10, die den Steg 3 des Schlittens 2 beidseitig mit Spiel überfassen. Zwischen dem Steg 3 und den U-Schenkeln 10 der Schwimmglocke 9 sind Axiallager 11 angeordnet, die eine radiale Verschiebung dieser Bauteile zueinander zulassen. Der kastenseitige U-Schenkel 10 der Schwimmglocke 9 weist eine Gewindebohrung 12 auf, in die ein Gewindeende 13 eines Bolzens 14 eingedreht ist, der sich mit Spiel durch zugeordnete glatte Bohrungen im Steg 3 und bei der dargestellten Ausführung auch durch den kastenfernen U-Schenkel 10 erstreckt. Der Bolzen 14 stützt sich mit seiner dem Gewindeende 13 benachbarten Stufe 16 auf der Innenseite des zugeordneten U-Schenkels 10 ab. Im Bereich der Bohrung 15 im Steg 3 ist der Bolzen 14 von einer Ausgleichsbuchse 17 umgeben.

An der Außenseite des kastenseitigen U-Schenkels 10 ist die Adapterplatte 5 befestigt. An der Adapterplatte ist der Geradschrauber 6 befestigt. Für unterschiedliche Schrauberkonstruktionen werden unterschiedliche Adapterplatten 5 eingesetzt. Das freie Schrauberende mit einem Steckschlüsseleinsatz 18 erstreckt sich durch die Adapterplatte 5 sowie mit Spiel durch entsprechende Durchgangsöffnungen 19 in den U-Schenkeln 10 der Schwimmglocke 9 und im Steg 3. Im Übrigen trägt der kastenferne U-Schenkel 10 der Schwimmglocke 9 außenseitig einen Deckel 20.

Das kastenartige Gehäuse kann an beliebiger Stelle und in beliebiger Position im Bereich einer Montagelinie für die Fahrzeugmontage von Kraftfahrzeugen angeordnet werden, z. B. an einer Konsole. Zum Heranführen des Steckschlüsseleinsatzes 18 an einer zugeordnete Zwischenspindel oder dergleichen wird der Hubzylinder 7 betätigt. Weil der Geradschrauber 6 mit der Adapterplatte 5 und der Schwimmglocke 9 fest verbunden ist, kann sich diese Baueinheit radial gegenüber dem Steg 3 des Schlittens 2 bewegen und dadurch das Ankuppeln des Steckschlüsseleinsatzes 18 an eine Zwischenspindel oder dergleichen unterstützen. Während des Schrauberbetriebes wird das Drehmoment des Geradschraubers 6 über die Adapterplatte 5 und die Schwimmglocke 9 sowie den Bolzen 14 in den Steg 3 des Schlittens 2 und damit in das Gehäuse 1 auf kurzem Wege eingeleitet.

### Bezugszeichenliste:

- 1: Gehäuse
- 2: Schlitten
- 3: Steg
- 4: Schwimmeinheit
- 5: Adapterplatte
- 6: Geradschrauber
- 7: Hubzylinder
- 8: Führungsschienen
- 9: Schwimmglocke
- 10: U-Schenkel
- 11: Axiallager
- 12: Gewindebohrung
- 13: Gewindeende
- 14: Bolzen
- 15: Bohrungen
- 16: Stufe
- 17: Ausgleichsbuchse
- 18: Steckschlüsseleinsatz
- 19: Durchgangöffnungen
- 20: Deckel
- 21: Anschlag
- 22: Meßfühler

## Patentansprüche

1. Schrauberanordnung, insbesondere für Montagelinien zur Fahrzeugmontage von Kraftfahrzeugen, mit einem Geradschraube (6), der an einer Konsole mittels eines Hubzylinders (7) in Achsrichtung und quer dazu in einer Schwimmeinheit (4) verschiebbar gelagert ist sowie in ausgefahrenem Zustand mit einer Zwischenspindel oder dergleichen kuppelbar ist, **gekennzeichnet durch** ein Gehäuse (1), in dem der Hubzylinder (7) und ein damit antreibbarer Schlitten (2) angeordnet sind, wobei der Schlitten (2) im Gehäuse (1) geführt ist und die Schwimmeinheit (4) für den daran mittels einer Adapterplatte (5) befestigten Geradschrauber (6) trägt.

2. Schrauberanordnung nach Anspruch 1, **dadurch gekennzeichnet, daß** das Gehäuse (1) ein an einer Längsseite und einer Stirnseite offener Kasten ist.

3. Schrauberanordnung nach Anspruch 2, **dadurch gekennzeichnet, daß** der Kasten Anschläge (21) zur Begrenzung des Schlittenweges aufweist.

4. Schrauberanordnung nach Anspruch 2 oder 3, **dadurch gekennzeichnet, daß** der Kasten Meßfühler (22) zum Erfassen der Schlittenposition aufweist.

5. Schrauberanordnung nach einem der Ansprüche 1 bis 4, **dadurch gekennzeichnet, daß** der Hubzylinder (7) ein Flachzylinder ist.

6. Schrauberanordnung nach einem der Ansprüche 1 bis 5, **dadurch gekennzeichnet, daß** der Hubzylinder (7) über dem Schlitten (2) angeordnet ist.

7. Schrauberanordnung nach einem der Ansprüche 1 bis 6, **dadurch gekennzeichnet, daß** die Schwimmeinheit (4) einen zum Schlitten (2) gehörenden Steg (3) und eine den Steg (3) überfassende U-förmige Schwimmglocke (9) sowie eine Drehmomentabstützung zwischen Steg (3) und Schwimmglocke (9) aufweist, wobei der Steg (3) und die U-Schenkel (10) der Schwimmglocke (9) Durchgangsöffnungen (19) für das sich dadurch mit radialem Spiel erstreckende Spindelende die Geradschraubers (6) aufweisen.

8. Schrauberanordnung nach einem der Ansprüche 2 bis 7, **dadurch gekennzeichnet, daß** die Adapterplatte (5) am kastenseitigen U-Schenkel (10) der Schwimmglocke (9) befestigbar ist.

9. Schrauberanordnung nach Anspruch 7, **dadurch gekennzeichnet, daß** zwischen dem Steg (3) und U-Schenkeln (10) der Schwimmglocke (9) Axiallager (11) angeordnet sind, die eine radiale Verschiebung dieser Bauteile zueinander zulassen.

10. Schrauberanordnung nach Anspruche 7, **dadurch gekennzeichnet, daß** die Drehmomentabstützung einen Bolzen (14) aufweist, der mit einem Gewindeende (13) in eine Gewindebohrung (12) U-Schenkels (10) der Schwimmglocke (9) eindrehbar ist und der sich mit Spiel durch eine Bohrung (15) des Stegs (3) erstreckt.

## Claims

1. A screwing device, particularly for assembly lines to assemble motor vehicles, equipped with a straight screwing unit (6) which rests in displaceable arrangement at a bracket by means of a stroke cylinder (7) in axial direction and transversely in a floating unit (4) and which can be coupled to an intermediate spindle or the like when being in extended position, **characterized by** a casing (1) in which the stroke cylinder (7) and a carriage (2) which can be driven thereby are accommodated, with said carriage (2) being guided in the casing (1) and carrying the floating unit (4) for the straight screwing unit (6) fastened to it by means of an adapter plate (5).

2. A screwing device pursuant to Claim 1, **characterized in that** said casing (1) is a box being open at one longitudinal side and at one front side.

3. A screwing device pursuant to Claim 2, **characterized in that** said box is provided with limit stops (21) to limit the carriage way.

4. A screwing device pursuant to Claim 2 or 3, **characterized in that** said box is provided with measuring sensors (22) to pick-up the carriage position.

5. A screwing device pursuant to any of Claims 1 to 4, **characterized in that** the stroke cylinder (7) is a flat cylinder.

6. A screwing device pursuant to any of Claims 1 to 5, **characterized in that** the stroke cylinder (7) is arranged above the carriage (2).

7. A screwing device pursuant to any of Claims 1 to 6, **characterized in that** the floating unit (4) is provided with a web (3) belonging to the carriage (2) and with a U-shaped floating bell (9) overlapping said web (3) and provided with a torque support between said web (3) and the floating bell (9), with said web (3) and the U-shaped legs (10) of the floating bell (9) being provided with passage ports (19) for the spindle end of the straight screwing unit (6) extending through it with radial play.

8. A screwing device pursuant to any of Claims 2 to 7, **characterized in that** the adapter plate (5) can be fastened to the box-side U-shaped leg (10) of said floating bell (9).

9. A screwing device pursuant to Claim 7, **characterized in that** axial bearings (11) are arranged between said web (3) and said U-shaped legs (10) of the floating bell (9) which allow for a radial displacement of these components to each other.

10. A screwing device pursuant to Claim 7, **characterized in that** the torque support is provided with a bolt (14) which can be turned with one threaded end (13) into a threaded bore (12) of said U-shaped leg (10) of the floating bell (9) and which extends with some play through a bore (15) of said web (3).

## Revendications

1. Dispositif de vissage, en particulier pour lignes de montage de véhicules automobiles, avec une visseuse droite (6) qui est logée sur une console et peut être déplacée au moyen d'un vérin de levage (7) dans le sens de l'axe et transversalement à celui-ci dans une unité flottante (4) et qui, à l'état sorti, peut être accouplée à une broche intermédiaire ou autre, **caractérisé par** un boîtier (1) dans lequel sont logés le vérin de levage (7) et un coulisseau (2) entraînable par ce dernier, le coulisseau (2) étant guidé dans le boîtier (1) et portant l'unité flottante (4) pour la visseuse droite (6) qui y est fixée au moyen d'une plaque adaptatrice (5).

2. Dispositif de vissage selon la revendication 1, **caractérisé en ce que** le boîtier (1) est une caisse ouverte sur un côté longitudinal et sur un côté frontal.

3. Dispositif de vissage selon la revendication 2, **caractérisé en ce que** la caisse présente des butées (21) permettant de limiter la course du coulisseau.

4. Dispositif de vissage selon la revendication 2 ou 3, **caractérisé en ce que** la caisse présente des capteurs de mesure (22) pour la saisie de la position du coulisseau.

5. Dispositif de vissage selon l'une des revendications 1 à 4, **caractérisé en ce que** le vérin de levage (7) est un vérin plat.

6. Dispositif de vissage selon l'une des revendications 1 à 5, **caractérisé en ce que** le vérin de levage (7) est disposé au-dessus du coulisseau (2).

7. Dispositif de vissage selon l'une des revendications 1 à 6, **caractérisé en ce que** l'unité flottante (4) présente une aile (3) faisant partie du coulisseau (2) et une cloche flottante (9) en forme de U chevauchant l'aile (3) ainsi qu'un support de couple de rotation entre l'aile (3) et la cloche flottante (9), l'aile (3) et la branche en U (10) de la cloche flottante (9) présentant des ouvertures de passage (19) pour l'extrémité de broche de la visseuse droite (6) traversant lesdites ouvertures de passage avec un jeu radial.

8. Dispositif de vissage selon l'une des revendications 2 à 7, **caractérisé en ce que** la plaque adaptatrice (5) peut être fixée sur la branche en U (10) côté caisse de la cloche flottante (9).

9. Dispositif de vissage selon la revendication 7, **caractérisé en ce que** des paliers axiaux (11) sont disposés entre l'aile (3) et les branches en U (10) de la cloche flottante (9), lesdits paliers axiaux autorisant un décalage radial de ces composants les uns par rapport aux autres.

10. Dispositif de vissage selon la revendication 7, **caractérisé en ce que** le support de couple de rotation présente un axe (14) qui se laisse visser avec une extrémité filetée (13) dans un taraudage (12) de la branche en U (10) de la cloche flottante (9) et qui traverse un perçage (15) de l'aile (3) avec un jeu.
